# EUROPÄISCHE PATENTSCHRIFT

(11) **EP 3 076 110 B1**
(45) Veröffentlichungstag und Bekanntmachung des Hinweises auf die Patenterteilung: **27.02.2019**
(21) Anmeldenummer: 16155272.4
(22) Anmeldetag: 11.02.2016
(51) Int. Cl.: F25D 17/02, F25B 25/00, F25B 29/00

(54) **FLUIDSYSTEM UND VERFAHREN ZUM STEUERN EINES FLUIDSYSTEMS**
FLUID SYSTEM AND METHOD FOR CONTROLLING A FLUID SYSTEM
SYSTEME FLUIDIQUE ET PROCEDE DE COMMANDE D'UN SYSTEME FLUIDIQUE

(30) Priorität: 30.03.2015 DE 102015104901; 20.10.2015 DE 102015117851
(43) Veröffentlichungstag der Anmeldung: 05.10.2016
(73) Patentinhaber: Viessmann Werke GmbH & Co. KG, 35108 Allendorf (DE)
(72) Erfinder: Brockmann, Robert, 60316 Frankfurt (DE); Geitz, Benedikt, 35088 Battenberg (DE); Neumeier, Markus, 34454 Bad Arolsen (DE); Vaupel, Manfred, 35066 Frankenberg (DE); Bündgen, Fabian, 35041 Marburg (DE)
(74) Vertreter: Sperschneider, Alexandra

(56) Entgegenhaltungen:
- EP-A1- 2 363 668
- EP-A2- 1 262 722
- DE-A1- 1 807 916
- DE-A1-102009 011 715
- DE-A1-102013 007 880
- DE-T2- 60 107 901
- DE-U1-202014 104 867
- JP-A- 2014 136 548

## Beschreibung

Es werden ein Fluidsystem und ein Verfahren zum Steuern eines Fluidsystems beschrieben. Fluidsysteme werden bspw. zum Heizen und/oder Kühlen von Gebäuden oder Anlagen verwendet.

Bei diesen Fluidsystemen wird von einer zentralen Heiz- oder Kühlquelle ein Fluid auf eine bestimmte Temperatur gebracht und das Fluid über Leitungen zu Verbrauchern geführt, die ein Kühlen oder Erwärmen durch Wärmeabgabe oder Wärmeaufnahme über das Fluid bereitstellen. In der Regel ist dazu eine zentrale Förder- oder Umwälzpumpe in einem solchen Kreislauf angeordnet. Die Förder- oder Umwälzpumpe dient zur Zufuhr des Fluids zu den Verbrauchern und zur Rückführung des Fluids zur Heiz- oder Kühlquelle. Die Zuführ- und Abführwege des Fluids können mitunter unterschiedlich lang sein, sodass es neben einem Druckabfall für weit entfernte Verbraucher auch zu einem Temperaturanstieg oder -abfall des Fluids über die Zuführleitung hinweg kommen kann. Dies kann durch eine Änderung der Drehzahl der Förder- oder Umwälzpumpe oder durch eine Temperaturänderung des Fluids kompensiert werden, wobei hierdurch das Problem entsteht, dass nahe an der Heiz- oder Kühlquelle angeordnete Verbraucher mit einem zu hohen Druck oder einer zu hohen bzw. niedrigen Temperatur des Fluids versorgt werden. Um dies zu verhindern, sind aus dem Stand der Technik Regelventile oder dezentrale Pumpen vorgesehen. Ein solches System ist bspw. in DE 10 2013 004 106 A1 beschrieben.

Ein Verfahren und eine Vorrichtung zur Vereinfachung des hydraulischen Abgleichs von Fluid durchströmten Leitungsnetzen werden in DE 10 2012 023 848 A1 beschrieben. In einem solchen Leitungsnetz wird ein Messen von Kennwerten für eine Vielzahl von parallel in das Leitungsnetz eingebundenen Verbrauchern durchgeführt. In Abhängigkeit der ermittelten Kennwerte kann anschließend eine Leistungsanpassung eines Erzeugers durchgeführt werden.

EP 2 363 668 A1 beschreibt ein Fluidsystem und ein Verfahren zur Steuerung eines Fluidsystems gemäß dem Oberbegriff der Ansprüche 1 und 3.

Nachteilig bei den aus dem Stand der Technik bekannten Systemen ist zum einen der komplexe Aufbau. Hierbei muss eine Vielzahl von Vorrichtungen (Messsysteme, Regelventile etc.) vorgesehen sein, um einen Abgleich vorzunehmen. Insbesondere weisen solche Systeme Nachteile im Hinblick auf Schwankungen auf einer Erzeuger- oder Abnehmerseite auf. Bei den Systemen erfolgt ein ständiges Messen der Zustandsgrößen, wobei in Abhängigkeit der Messergebnisse die Heiz- oder Kühlleistung einer Heiz- bzw. Kühlvorrichtung verändert werden. Ein weiteres Problem besteht für bekannte Systeme in der Erzeugereinrichtung (Heiz- oder Kühlquelle), insbesondere dann wenn eine Wärmepumpe verwendet werden soll. Bei Wärmepumpen ist ein häufiges An- und Ausschalten (Takten) nachteilig. Bei Systemen mit unterschiedlichen Anforderungen durch die Verbraucher an einen Erzeuger (Wärmepumpe) kommt es jedoch häufig zu einem Takten. Konventionelle Wärmepumpen für Kühl- oder Heizsysteme weisen in der Regel zwei Zustände auf, nämlich einen eingeschalteten und einen ausgeschalteten Zustand. Vorzugsweise sollen die Ein- und Ausschaltvorgänge bei Wärmepumpen gering gehalten werden. In Systemen mit Schwankungen im Verbraucherfluidkreislauf gestaltet sich daher eine Reduzierung des Taktens der Wärmepumpen als äußert schwierig. In der Regel ist es nicht möglich, ein häufiges Takten zu vermeiden.

Aus dem Stand der Technik sind auch drehzahlgeregelte Wärmepumpen bekannt. Bei einer drehzahlgesteuerten Wärmepumpe kann die Leistung der Wärmepumpe durch die Drehzahländerung eines Verdichters angepasst werden. Dies bedeutet, dass die Vorlauftemperatur abgesenkt oder angehoben werden kann. Bei einem Fluidsystem mit mehreren parallelen Nebenfluidkreisläufen (Strängen) auf der Abnehmerseite (Verbraucherfluidkreislauf) liegt vor jedem Strang eine unterschiedliche Temperatur an. Die einzelnen Stränge weisen jeweils eine Kühlvorrichtung und ein Ventil oder eine drehzahlgeregelte Pumpe auf, über welche die Menge eines zugeführten Fluids und damit die Kühlleistung geregelt werden kann. Mit zunehmender Entfernung der Kühlvorrichtungen (Kühlstelle) nimmt die Trägheit des Stranges zu. Im schlechtesten Fall bedeutet dies, dass die Vorlauftemperatur derart verharrt, dass die Kühlvorrichtung nicht optimal gekühlt werden kann oder die drehzahlgeregelte Pumpe so weit die Drehzahl reduziert, dass die drehzahlgeregelte Pumpe automatisch abgeschaltet wird.

Des Weiteren besteht bei solchen Fluidsystemen die Gefahr, insbesondere bei einem Fluidsystem mit einer Inverter-Wärmepumpe auf der Erzeugerseite derart wenig Fluid gefördert wird, dass die Fluidtemperatur durch Wärmeeintrag von Außen mit zunehmender Entfernung zum Kälteerzeuger, d.h. Wärmepumpe, zunimmt. Somit besteht das Problem, dass nicht bei jedem Strang die gleiche Temperatur anliegt. Ist die Fluidtemperatur nicht bei jedem Strang gleich, so ist der geförderte Massestrom über einen ersten Strang deutlich kleiner als der Massestrom, der über einen letzten Strang gefördert wird.

Nachfolgend sind beispielhaft Übersichten gezeigt, welche den Massestromanstieg in dem letzten Strang (Strang 2) gegenüber dem ersten Strang (Strang 1) eines Fluidsystems bei einem Temperaturanstieg im Vorlauf um 0,5 K, 1 K und 1,5 K darstellen:
Beispielrechnung für 0,5 Kelvin

| | Strang 1 | Strang 2 | |
|---|---|---|---|
| Q_0 | 4 | 4 | kW |
| cp | 3,5 | 3,5 | kJ/(kg*K) |
| T (Vorlauf) | -2 | -1,5 | °C |
| T (Rücklauf) | 2 | 2 | °C |
| | | | |
| Massenstrom | 0,29 | 0,33 | kg/s |
| Massenstrom | 1,03 | 1,18 | m^3/h |
| | | | |
| Verhältnis | | 12,5 | % |

Beispielrechnung für 1 Kelvin

| | Strang 1 | Strang 2 | |
|---|---|---|---|
| Q_0 | 4 | 4 | kW |
| cp | 3,5 | 3,5 | kJ/(kg*K) |
| T (Vorlauf) | -2 | -1 | °C |
| T (Rücklauf) | 2 | 2 | °C |
| | | | |
| Massenstrom | 0,29 | 0,38 | kg/s |
| Massenstrom | 1,03 | 1,37 | m^3/h |
| | | | |
| Verhältnis | | 25 | % |

Beispielrechnung für 1,5 Kelvin

| | Strang 1 | Strang 2 | |
|---|---|---|---|
| Q_0 | 4 | 4 | kW |
| cp | 3,5 | 3,5 | kJ/(kg*K) |
| T (Vorlauf) | -2 | -0,5 | °C |
| T (Rücklauf) | 2 | 2 | °C |
| | | | |
| Massenstrom | 0,29 | 0,46 | kg/s |
| Massenstrom | 1,03 | 1,65 | m^3/h |
| | | | |
| Verhältnis | | 37,5 | % |

Für das Fluidsystem beschreibt Q_0 den Wärmestrom, T die Temperatur und cp die spezifische Wärmekapazität.

In den oben gezeigten Beispielen ergibt sich in Strang 2 eine in etwa 12,5 %-ige Zunahme des Massestroms gegenüber dem Massestrom in Strang 1 bei einem Temperaturanstieg im Vorlauf um 0,5 K, eine in etwa 25 %-ige Zunahme des Massestroms bei einem Temperaturanstieg im Vorlauf um 1 K und eine in etwa 37,5 %-ige Zunahme des Massestroms bei einem Temperaturanstieg im Vorlauf um 1,5 K.

In einem solchen Fluidsystem kommt es zu einem Temperaturanstieg im Vorlauf, d.h. in einer Zuführleitung des Verbraucherfluidkreislaufs, auch wenn über die Inverter-Wärmepumpe das Fluid weiter herabgekühlt wird, um den Massestrom in den Strängen zu reduzieren. Dabei kann es jedoch, wie vorstehend bereits angegeben, zu einem derartigen Abkühlen des Fluids kommen, dass das Ventil oder die Pumpe, welche die Fluidzufuhr im ersten Strang für die darin angeordnete Kühlvorrichtung regeln, die Fluidzufuhr (fast) vollständig abregeln oder die Pumpe abgeschaltet wird. Darüber hinaus besteht bei einem solchen Fluidsystem das Problem, dass die Menge des zugeführten Fluids in einem letzten Strang für eine stärkere Kühlung nicht mehr im erforderlichen Maß bereitgestellt werden kann, wenn keine Herabsetzung der Fluidtemperatur über die drehzahlgeregelte Wärmepumpe erfolgt. Grund hierfür ist, dass die Pumpe oder das Ventil für die Kühlvorrichtung im letzten Strang ohnehin schon einen großen Massestrom zu der Kühlvorrichtung leiten, wobei das Fördervolumen der Pumpe oder die Öffnungsstellung des Ventils bereits in ihrem jeweiligen Maximum liegen. Eine Möglichkeit dies zu kompensieren wäre die Pumpe oder das Ventil zumindest im letzten Strang deutlich überzudimensionieren. Dies ist jedoch aus wirtschaftlichen Gründen nicht sinnvoll. Eine Regelung des Fluidkreislaufs über eine drehzahlgeregelte Wärmepumpe ist daher nicht geeignet, um einen sicheren Betrieb der Kühlvorrichtungen in den Strängen bzw. Nebenfluidkreisläufen eines Fluidsystems bereitzustellen, einen Temperaturanstieg im Vorlauf zu reduzieren und die Wärmepumpe effizient zu betreiben.

Es ist daher Aufgabe, ein Fluidsystem sowie ein Verfahren zum Steuern eines Fluidsystems anzugeben, bei welchem ein Temperaturanstieg über einen Verbraucherfluidkreislauf hinweg reduziert, ein sicherer Betrieb von Kühlvorrichtungen bereitgestellt und der Betrieb von drehzahlgeregelten Wärmepumpen optimiert wird.

Die Aufgabe wird durch ein Verfahren mit den in Anspruch 1 angegebenen technischen Merkmalen und durch ein Fluidsystem mit den in Anspruch 3 angegebenen technischen Merkmalen gelöst. Vorteilhafte Weiterbildungen sind in den Unteransprüchen im Detail angegeben.

Bei einem Verfahren zur Steuerung eines Fluidsystems, welches die vorstehend genannte Aufgabe löst, aufweisend mindestens eine drehzahlgeregelte Wärmepumpe und einen mit der mindestens einen drehzahlgeregelten Wärmepumpe gekoppelten Verbraucherfluidkreislauf, wobei der Verbraucherfluidkreislauf mindestens zwei Nebenfluidkreisläufe aufweist, die mit einer Zuführleitung und einer Rückführleitung des Verbraucherfluidkreislaufs verbunden sind und die jeweils mindestens eine Kühlvorrichtung sowie eine Pumpe zur Regelung der Fluidzufuhr zu der mindestens einen Kühlvorrichtung aufweisen, und wobei der Verbraucherfluidkreislauf mindestens eine Ausgleichspumpe aufweist, wird die mindestens eine Ausgleichspumpe so gesteuert, dass der Massestrom im Verbraucherfluidkreislauf konstant gehalten wird.

Die mindestens eine drehzahlgeregelte Wärmepumpe ist dabei in einem Erzeugerfluidkreislauf angeordnet oder bildet den Erzeugerfluidkreislauf. Bei der mindestens einen drehzahlgeregelten Wärmepumpe wird ein Verdichter in Abhängigkeit des aktuell benötigten Kühlbedarfs betrieben. D.h., dass auch die Leistung der drehzahlgeregelten Wärmepumpe variiert. Wird wenig Kühlleistung benötigt, so wird die drehzahlgeregelte Wärmepumpe auf eine geringe Leistung geregelt, wird eine hohe Kühlleistung benötigt, so wird die drehzahlgeregelte Wärmepumpe auf eine hohe Leistung geregelt. Dazu wird die Drehzahl eines Verdichters erhöht oder reduziert. Der Massestrom des Fluids, welches über die mindestens eine drehzahlgeregelte Wärmepumpe gekühlt wird, wird über die Ausgleichspumpe geregelt.

Bei dem Verfahren wird das Massestromverhältnis über die mindestens eine Ausgleichspumpe konstant gehalten, was starke Schwankungen in der Leistungsaufnahme der mindestens einen drehzahlgeregelten Wärmepumpe reduziert. Erhöht sich beispielsweise der Massestrom in einem ersten Nebenfluidkreislauf, würde dies bei einem Fluidsystem ohne Ausgleichspumpe zur Folge haben, dass der Kühlvorrichtung in einem zweiten Nebenfluidkreislauf eine geringere Kühlleistung zur Verfügung steht. Die mindestens eine Ausgleichspumpe regelt den Gesamtmassestrom im Verbraucherfluidkreislauf derart, dass dieser im Wesentlichen konstant bleibt. D.h. wird ein größerer Massestrom über mindestens eine der Pumpen der Nebenfluidkreisläufe gefördert, wird der Massestromanteil, der über die mindestens eine Ausgleichspumpe gefördert wird entsprechend reduziert. Analog dazu wird der Massestromanteil der mindestens einen Ausgleichspumpe erhöht, wenn der über mindestens eine der Pumpen der Nebenfluidkreisläufe geförderte Massestrom reduziert wird.

In Fluidsystemen ohne Ausgleichspumpe würde insbesondere der Massestrom stark schwanken, weil der Kühlbedarf bei den Kühlvorrichtungen und damit die Menge des zu den Kühlvorrichtungen geführten Fluids in Abhängigkeit des Kühlbedarfs variiert. Bei einem hohen Fluidbedarf würde dann ein entsprechend großer Massestrom den Kühlvorrichtungen zugeführt und entsprechend die Fluidtemperatur im Rücklauf bzw. in der Rückführleitung ansteigen. Infolge dessen würde die Leistung der drehzahlgeregelten Wärmepumpe erhöht, was wiederum in einer Herabsetzung des Massestroms in den Nebenfluidkreisläufen für die Kühlvorrichtungen resultiert, da entsprechend weniger Fluid zum Kühlen aufgrund der herabgesetzten Fluidtemperatur benötigt wird. Als Folge einer Herabsetzung des Massestroms kann dann bspw. die Drehzahl der Pumpen in den Nebenfluidkreisläufen soweit reduziert werden, dass die Fluidzufuhr in den Nebenfluidkreisläufen unterbrochen wird.

Das hierin beschriebene Verfahren und auch das nachfolgend beschriebene Fluidsystem reduzieren diese Massestromschwankungen, indem die mindestens eine Ausgleichspumpe variierend betrieben wird, um den Gesamtmassestrom im Wesentlichen konstant zu halten.

Insbesondere wird die mindestens eine Ausgleichspumpe nach Maßgabe der mindestens einen Wärmepumpe und der Pumpen in den Nebenfluidkreisläufen geregelt, so dass in Summe der Massestrom in Verbraucherfluidkreislauf konstant ist.

Ein weiterer Vorteil ergibt sich darin, dass über das Volumen in den Rohrleitungen des Verbraucherfluidkreislaufs "Kälte" gespeichert werden kann.

Ein Erzeugerfluidkreislauf und der Verbraucherfluidkreislauf können weisen jeweils mindestens eine Zuführ- und eine Rückführleitung aufweisen. An die Zuführ- und Rückführleitungen des Erzeugerfluidkreislaufs und des Verbraucherfluidkreislaufs können sich parallele Nebenfluidkreisläufe anschließen, wobei die Zuführ- und Rückführleitungen der Nebenfluidkreisläufe entsprechend mit den Zuführ- und Rückführleitungen der zugehörigen Hauptkreisläufe verbunden sind. Das Fluidsystem weist hierzu Rohrsysteme auf, in welchen das Fluid geführt wird. Als Fluid wird für das Fluidsystem wird Wasser mit einem Frostzusatz (Kältemittel), wie z.B. eine Sole verwendet. Die Sole kann dabei eine Wasser-Glykol-Mischung sein.

Bei einem Fluidsystem mit nur einer Kühlvorrichtung und relativ geringen Leitungslängen, insbesondere im Verbraucherfluidkreislauf, ist eine Ausgleichspumpe für die Einstellung des Massestromverhältnisses und für die Zufuhr des Fluids zu der Kühlvorrichtung ausreichend. Es können auch mehrere Ausgleichspumpen vorgesehen sein, die an verschiedenen Positionen des Verbraucherfluidkreislaufs angeordnet sind. Die mindestens eine Ausgleichspumpe ist als zentrale Pumpe erfindungsgemäß zwischen der Zuführleitung und der Rückführleitung des Verbraucherfluidkreislaufs angeordnet. Weist das Fluidsystem mehrere Kühlvorrichtungen auf, sind diese über die vorstehend genannten parallelen Nebenfluidkreiskreisläufe in dem Verbraucherfluidkreislauf angeordnet. Die Nebenfluidkreisläufe weisen jeweils mindestens eine Kühlvorrichtung und eine Pumpe zur Zufuhr des Fluids zu der Kühlvorrichtung auf. Die Pumpe regelt die Zufuhr des Fluids unabhängig von der Zufuhr des Fluids in der Zuführleitung des Verbraucherfluidhauptkreislaufs. Die Pumpen sind als dezentrale Pumpen in dem Verbraucherfluidkreislauf angeordnet. Die mindestens eine Ausgleichspumpe im Verbraucherfluidhauptkreislauf wird dann in Abhängigkeit des Kühlbedarfs der Kühlvorrichtungen geregelt, wobei der Gesamtmassestrom im Verbraucherfluidkreislauf konstant gehalten wird. Hierzu können die mindestens eine Ausgleichspumpe und die Pumpen der Kühlvorrichtungen drehzahlgesteuerte Pumpen sein. Wird die Drehzahl der Pumpen für die Kühlvorrichtungen erhöht, um eine höhere Kühlleistung über die Kühlvorrichtungen bereitzustellen, wird entsprechend die Drehzahl der mindestens einen Ausgleichspumpe reduziert, wobei die Drehzahl derart eingeregelt wird, dass im Mittel die Temperaturspreizung zwischen dem Vorlauf (Zuführleitung) und Rücklauf (Rückführleitung) des Verbraucherfluidhauptkreislauf bei 4 Kelvin liegt. Des Weiteren kann die Drehzahl der mindestens einen Ausgleichspumpe derart geregelt werden, dass bei Unterschreiten einer Temperaturspreizung von 2,5 Kelvin (+/- 0,5 Kelvin), die Wärmepumpe außerbetrieb gesetzt wird.

Bei größeren Fluidsystemen können mindestens zwei, parallel geschaltete drehzahlgeregelte Wärmepumpen vorgesehen sein. Bspw. können zwei drehzahlgeregelte Wärmepumpen gleichzeitig oder nur eine drehzahlgeregelte Wärmepumpe zum Kühlen des Fluids betrieben werden. Es kann eine von zwei drehzahlgeregelten Wärmepumpen zur Grundversorgung, d.h. zum Herabsetzen der Fluidtemperatur, dauerhaft in Betrieb sein, wobei das Herabsetzen der Fluidtemperatur über die drehzahlgeregelten Wärmepumpen in einem bestimmten Bereich auch nur durch eine der drehzahlgeregelten Wärmepumpen durchgeführt werden kann. Beispielweise ist es - in Abhängigkeit des Leistungsvermögens der drehzahlgeregelten Wärmepumpen - möglich, eine Herabsetzung der Fluidtemperatur in einem bestimmten Temperaturbereich durchzuführen.

Wird jedoch eine deutlich größere Herabsetzung der Fluidtemperatur benötigt, wird mindestens eine zweite drehzahlgeregelte Wärmepumpe zugeschaltet. Bleibt der Kühlbedarf der Kühlvorrichtungen im Wesentlichen konstant oder unterliegt keinen großen Schwankungen, kann der Betrieb einer drehzahlgeregelten Wärmepumpe aufrechterhalten werden. Kommt es zu einem höheren Kühlbedarf werden die Pumpen der Kühlvorrichtungen entsprechend geregelt, wodurch ein größerer Massestrom über die Nebenfluidkreisläufe fließt und die Ausgleichspumpe die Schwankung zur Aufrechterhaltung des Massestroms im Verbraucherfluidkreislauf ausgleicht. Bei einem höheren Kühlbedarf kann es zu einem Anstieg der Fluidtemperatur in der Rückführleitung des Verbraucherfluidkreislaufs kommen. Ebenso kann es zu einem Anstieg der Fluidtemperatur in der Zuführleitung des Verbraucherfluidkreislaufs kommen. Es kommt dabei zu einem Anstieg der Temperaturdifferenz zwischen der Zuführleitung und der Rückführleitung im Verbraucherfluidkreislauf. Anschließend wird die Drehzahl einer ersten drehzahlgeregelten Wärmepumpe erhöht und/oder eine zweite drehzahlgeregelte Wärmepumpe in Betrieb gesetzt. Die zweite drehzahlgeregelte Wärmepumpe kühlt dann zusätzlich das Fluid, bis die ursprünglich vorgesehene und eingestellte Fluidtemperatur in der Zuführleitung des Verbraucherfluidkreislaufs wieder erreicht ist. Zudem wird die Fluidtemperatur in der Rückführleitung des Verbraucherfluidkreislaufs und der Zuführleitung des Erzeugerfluidkreislaufs herabgesetzt. Besteht ein hoher Kühlbedarf kann es erforderlich sein, die zweite drehzahlgeregelte Wärmepumpe über einen längeren Zeitraum zu betreiben. Ein erhöhter Kühlbedarf kann über die Drehzahl der Pumpen der Kühlvorrichtungen, der Steuersignale der Pumpen und/oder über eine Datenschnittstelle der Pumpen erfasst werden. In Abhängigkeit dieser Information kann die Änderung der Drehzahl der drehzahlgeregelten Wärmepumpen und das Zu- und Abschalten der ersten und zweiten drehzahlgeregelten Wärmepumpen gesteuert werden. In erster Linie erfolgt die Steuerung der Drehzahl der ersten und der zweiten drehzahlgeregelten Wärmepumpe sowie das Zu- und Abschalten der drehzahlgeregelten Wärmepumpen in Abhängigkeit der Fluidtemperatur.

Alternativ kann in weiteren Fluidsystemen auch eine dritte drehzahlgeregelte Wärmepumpe alternativ oder zusätzlich zur zweiten drehzahlgeregelten Wärmepumpe in Betrieb gesetzt werden, um ein weiteres Kühlen zu erreichen oder die zweite und die dritte drehzahlgeregelte Wärmepumpe abwechselnd in Betrieb zu setzen, wenn ein erhöhter Kühlbedarf vorherrscht. Es können auch mehr als drei drehzahlgeregelte Wärmepumpen bei einem Fluidsystem vorgesehen sein.

Die Steuerung der Zufuhr des Fluids zu der mindestens einen Kühlvorrichtung erfolgt über die dieser Kühlvorrichtung zugeordnete Pumpe. Im Idealfall ist die Zufuhr des Fluids für die Kühlvorrichtung konstant. Die Regelung des Fluids im Verbraucherfluidkreislauf erfolgt über die Ausgleichspumpe, welche als sogenannte Überströmpumpe ausgebildet sein kann.

Das Fluidsystem kann, wie vorstehend beschrieben, mindestens zwei drehzahlgeregelte Wärmepumpen aufweisen, wobei die mindestens zwei Wärmepumpen nach Maßgabe der Temperatur des Fluids im Erzeugerfluidkreislauf und/oder im Verbraucherfluidkreislauf gesteuert werden.

Insbesondere kann bei dem Verfahren durch die drehzahlgeregelte Wärmepumpe und eine drehzahlgeregelte Ausgleichspumpe sowie die drehzahlgeregelten Pumpen in den Nebenfluidkreisläufen die Fluidtemperatur im Wesentlichen konstant gehalten werden und unterliegt keinen großen Temperaturschwankungen, wie sie bspw. bei Fluidsystemen mit konventionellen Wärmepumpen durch das häufige An- und Abschalten auftreten.

Das Fluidsystem kann vor allem in einer ersten Betriebsart, in der sich unter Aufrechterhalten einer Temperaturdifferenz zwischen Vorlauf und Rücklauf ein im Wesentlichen konstanter Massestrom im Fluidsystem bzw. im Verbraucherfluidkreislauf einstellt, und in einer zweiten Betriebsart betrieben werden, in der die Fluidtemperatur unter eine Soll-Temperatur abgesenkt wird, um "Kälte" zu speichern, wobei die Temperaturdifferenz zwischen Vorlauf und Rücklauf unter einen Schwellenwert fallen darf.

Bei einem Fluidsystem, welches die vorstehend genannte Aufgabe löst, aufweisend einen Erzeugerfluidkreislauf und einen Verbraucherfluidkreislauf,
- weist der Erzeugerfluidkreislauf mindestens eine drehzahlgeregelte Wärmepumpe auf,
- weist der Verbraucherfluidkreislauf mindestens zwei Nebenfluidkreisläufe auf, die jeweils mit einer Zuführleitung und einer Rückführleitung des Verbraucherfluidkreislaufs verbunden sind,
- weisen die Nebenfluidkreisläufe jeweils mindestens eine Kühlvorrichtung und eine Pumpe auf,
- weist der Verbraucherfluidkreislauf mindestens eine Ausgleichspumpe auf, und
- ist die mindestens eine Ausgleichspumpe derart steuerbar, dass der Massestrom im Verbraucherfluidkreislauf konstant gehalten wird.

Hierzu ist die mindestens eine Ausgleichspumpe zwischen der Zuführleitung und der Rückführleitung des Verbraucherfluidkreislaufs angeordnet. Die Steuerung bzw. Regelung der Ausgleichspumpe erfolgt in Abhängigkeit des Kältebedarfs der mindestens einen Kühlvorrichtung, d.h. des über die Pumpe der Kühlvorrichtung der Kühlvorrichtung zugeführten Massestroms, und der Leistung der mindestens einen drehzahlgeregelten Wärmepumpe.

Um den Massestrom in dem Verbraucherfluidkreislauf konstant zu halten, wird die Ausgleichspumpe derart geregelt, dass diese Schwankungen aufgrund verschiedener Leistungsanforderungen der Kühlvorrichtungen (Kältebedarf) und damit verschiedener Fördermengen der Pumpen zum Erzielen eines Soll-Fluidstroms ausgleicht.

Wie eingangs für das Verfahren bereits angegeben, weist der Verbraucherfluidkreislauf eine Vielzahl von Kühlvorrichtungen und jeweils eine den Kühlvorrichtungen zugeordnete Pumpe auf, wobei die Kühlvorrichtungen und die zugeordneten Pumpen in parallelen Nebenfluidkreisläufen angeordnet und mit der Zuführleitung und der Rückführleitung des Verbraucherfluidkreislaufs verbunden sind. Erfindungsgemäß weist der Verbraucherfluidkreislauf mindestens zwei parallele Nebenfluidkreisläufe mit jeweils mindestens einer Pumpe und einer Kühlvorrichtung aufweisen, wobei Zuführleitungen der Nebenfluidkreisläufe des Verbraucherfluidkreislaufs mit der Zuführleitung des Verbraucherfluidkreislaufs und Rückführleitungen der Nebenfluidkreisläufe mit der Rückführleitung des Verbraucherfluidkreislaufs verbunden sind. Zusätzlich oder alternativ kann ein Erzeugerfluidkreislauf mindestens zwei parallele Nebenfluidkreisläufe mit einer drehzahlgeregelten Wärmepumpe aufweisen, wobei Zuführleitungen der Nebenfluidkreisläufe des Erzeugerfluidkreislaufs mit einer Zuführleitung des Erzeugerfluidkreislaufs und Rückführleitungen der Nebenfluidkreisläufe mit einer Rückführleitung des Erzeugerfluidkreislaufs verbunden sind.

In dem Fluidsystem ist ein Kältemittel aufgenommen, welches in den Leitungen des Verbraucherfluidsystems und des Erzeugerfluidsystems aufgenommen ist. Als Kältemittelträger kann Wasser mit einem Frostmittel, insbesondere eine sogenannte Sole zum Einsatz kommen, die eine Wasser-Glykol-Mischung umfasst.

Die mindestens eine Ausgleichspumpe, mindestens eine Förderpumpe und/oder die mindestens eine Pumpe können drehzahlgesteuerte Pumpen sein. Drehzahlgesteuerte bzw. -geregelte Pumpen können einfach in ihrer Fördermenge verändert und zentral gesteuert werden. Die mindestens eine Ausgleichspumpe kann dabei als sogenannte Überströmpumpe ausgebildet sein.

Mindestens in der Rückführleitung des Verbraucherfluidkreislaufs, der Zuführleitung des Verbraucherfluidkreislaufs, einer Rückführleitung des Erzeugerfluidkreislaufs, und/oder einer Zuführleitung des Erzeugerfluidkreislaufs kann mindestens eine Temperaturerfassungseinrichtung angeordnet sein. Die Temperaturerfassungseinrichtungen dienen zum Messen der Fluidtemperatur an verschiedenen Stellen im Fluidsystem. In Abhängigkeit der gemessenen Fluidtemperaturen kann bspw. der Betrieb der drehzahlgeregelten Wärmepumpen gesteuert werden. Hierzu wird auf die eingangs beschriebenen Temperaturabhängigen Verfahren verwiesen.

Die Kühlvorrichtungen können Wärmeübertrager sein, wie z.B. Platten- oder Rohr-Wärmeübertrager mit einem Gebläse oder Ventilator.

Über die mindestens eine drehzahlgeregelte Ausgleichspumpe (Überströmpumpe) kann bei dem Fluidsystem die Vorlauftemperaturen jedes Stranges (Nebenfluidkreislaufs) angeglichen werden.

Die wesentlichen Komponenten des Fluidsystems sind die mindestens eine drehzahlgeregelte Wärmepumpe (Leistungsanpassung), die mindestens eine Ausgleichspumpe (Überströmpumpe), das dezentrale Pumpensystem in den Nebenfluidkreisläufen und die Temperaturspreizung zwischen Vorlauf und Rücklauf bei 4 Kelvin, wenn keine Kältespeicherung erfolgt.

Des Weiteren besteht die Möglichkeit bei einem Verbund mit zwei drehzahlgeregelten Wärmepumpen gleichfalls die Temperaturen vor den Strängen (Nebenfluidkreisläufen) anzugleichen. Wird mehr Kälteleistung benötigt, wobei die Temperaturdifferenz ΔT über den Wärmetauscher (WT) der drehzahlgeregelten Wärmepumpe kleiner 4 Kelvin wird, so öffnet ein Drei-Wege-Ventil in der Zuführleitung des Erzeugerfluidkreislaufs (Rücklauf) der beiden drehzahlgeregelten Wärmepumpe. Dieses Ventil öffnet solange bis sich die gewollte Spreizung über den WT der ersten drehzahlgeregelten Wärmepumpe einstellt. Des Weiteren läuft die zweite drehzahlgeregelte Wärmepumpe geregelt. Die Leistung der zweiten drehzahlgeregelten Wärmepumpe wird so lange angehoben bis sich gleichfalls auch bei der zweiten drehzahlgeregelten Wärmepumpe die Sollspreizung von 4 Kelvin einstellt. Wird wieder weniger Kälteleistung benötigt, so wird die Drehzahl der zweiten drehzahlgeregelten Wärmepumpe so weit reduziert, bis die Soll-Spreizung erreicht ist. Sobald wie keine zusätzliche Kälteleistung mehr benötigt wird, schaltet die zweite drehzahlgeregelte Wärmepumpe ab und das 3-Wege-Ventil verschließt den Strömungsweg zur zweiten drehzahlgeregelten Wärmepumpe.

Wesentliche Bestandteile des vorstehenden Fluidsystems mit zwei drehzahlgeregelten Wärmepumpen sind zwei drehzahlgeregelte Wärmepumpen, welche in ihrer Leistung angepasst werden können, ein 3-Wege-Ventil, die mindestens eine Ausgleichspumpe (Überströmpumpe), das dezentrale Pumpensystem in den Nebenfluidkreisläufen und die Temperaturspreizung zwischen Vorlauf und Rücklauf bei 4 Kelvin, wenn keine Kältespeicherung erfolgt.

Zusätzlich erlaubt die Ausgleichspumpe (Überstrompumpe) auch, "Kälte" in dem Fluidsystem zu speichern. Ähnlich wie bei einem Fluidsystem mit einem "Kälte"-Puffer erlaubt der Verbund "Kälte" zu speichern. Zum einen dadurch, dass die Drehzahl der Ausgleichspumpe (Überströmpumpe) erhöht wird. Somit strömt mehr kaltes Fluid in die Rückführleitung (Rücklauf) des Verbraucherfluidkreislaufs, so dass in der Rückführleitung die Fluid-Temperatur herabgesenkt wird. Das bedeutet, dass im ersten Schritt zwar Kälteleistung durch die Durchmischung des kalten Fluides mit dem wärmeren Fluid der Rückführleitungen der einzelnen Nebenkreisläufe (Stränge) vernichtet wird, aber dieses vorteilhaft sein kann, falls abzusehen ist, dass bspw. die Energiekosten für den Betrieb der drehzahlgeregelten Wärmepumpen ansteigen werden. Bspw. wird der Strom für den Betrieb des Fluidsystems von einer Photovoltaikanlage bereitgestellt. Kann von der Photovoltaikanlage weniger bis kein Strom mehr erzeugt werden, muss der Strom für den Betrieb bspw. über ein öffentliches Stromnetz bezogen werden, was deutlich teurer ist. Ferner schwanken die Strompreise über einen bestimmten Zeitraum (Tag/Woche/Monat), wobei dann, wenn die Stromkosten gering sind, "Kälte" gespeichert wird und die gespeicherte "Kälte" an das Fluid abgegeben wird, wenn die Stromkosten höher sind. Das bedeutet, dass sich bspw. beim Abfall der Photovoltaik-Leistung die Leistungsaufnahme der drehzahlgeregelten Wärmepumpe aufgrund der Herabsetzung der Fluidtemperatur im Rücklauf reduziert. Dieses gilt auch beim Lastabwurf. Ist zu erwarteten, dass durch die Zuschaltung einer weiteren Last eine Leistungsspitze (Strompike) entsteht, erlaubt dieses Vorgehen die elektrische Aufnahme der drehzahlgeregelten Wärmepumpe zu reduzieren. Des Weiteren besteht auch die Möglichkeit aufgrund von überschüssigen Photovoltaik-Strom oder günstigen "Flexstrom" (Überangebot von Strom aufgrund zu hoher Einspeisung in ein Netz) "Kälte" im Verbund zu speichern. Hierfür wird die Solltemperatur herabgesetzt. Des Weiteren kann auch - je nach Anforderung - auch die Drehzahl der Ausgleichspumpe (Überströmpumpe) erhöht werden.

Um "Kälte" zu speichern wird entweder bei einer drehzahlgeregelten Wärmepumpe die Drehzahl erhöht oder sogar eine zweite drehzahlgeregelte Wärmepumpe zugeschaltet, wodurch die Fluid-temperatur gesenkt werden kann. Die Fluidtemperatur in der Zuführleitung des Verbraucherfluidkreislaufs wird dabei abgesenkt. Daher werden die Pumpen der Kühlvorrichtungen entsprechend geregelt, so dass weniger Fluid den Kühlvorrichtungen zugeführt wird. Die Kühlleistung der Kühlvorrichtungen bleibt dabei aber im Wesentlichen gleich. Als Folge dessen wird auch die Kühltemperatur in der Rückführleitung des Verbraucherfluidkreislaufs reduziert. Nach dem Absenken der Fluidtemperatur kann nur noch eine drehzahlgeregelte Wärmepumpe betrieben werden, welche die Fluidtemperatur auf dem abgesenkten Temperaturniveau hält. Wird nun von den Kühlvorrichtungen eine höhere Kühlleistung gefordert, kann diese dem Fluid entnommen werden. Dabei steigt die Fluidtemperatur in der Rückführleitung des Verbraucherfluidkreislaufs, bleibt aber unter oder im Wesentlichen gleich dem Temperaturniveau vor dem Absenken der Fluidtemperatur. Übersteigt die Fluidtemperatur in der Rückführleitung des Verbraucherfluidkreislaufs einen bestimmbaren Schwellenwert, wird die Drehzahl der drehzahlgeregelten Wärmepumpen erhöht und/oder die zweite drehzahlgeregelte Wärmepumpe zugeschaltet.

Insbesondere bei langen Leitungen kann daher ein relativ großer "Kälte"-Puffer durch das Fluidsystem bereitgestellt werden. Bspw. kann nachts "Kälte" gespeichert werden, wenn die Energiekosten für den Betrieb der Wärmepumpen gering sind. Die mindestens eine drehzahlgeregelte Wärmepumpe kann eine Inverter-Wärmepumpe sein. Bei einer Inverter-Wärmepumpe wird der Kompressor der Wärmepumpe stufenlos geregelt, wodurch die Leistungsaufnahme des Kompressors beeinflusst wird.

Es wird hierin stets von Masseströmen und Massestromverhältnissen gesprochen. Es kann aber ebenso von Volumenströmen und Volumenstromverhältnissen gesprochen werden. Es erfolgt keine oder zumindest nur eine vernachlässigbare kleine Änderung der Dichte des Fluids, so dass für das Fluidsystem und das Verfahren zum Steuern des Fluidsystems im Allgemeinen gilt, dass der Massestrom äquivalent zum Volumenstrom ist. Ferner gelten die für das Verfahren genannten Vorteile ebenso für das Fluidsystem und umgekehrt.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine schematische Darstellung eines Fluidsystems;
- Fig. 2: eine schematische Darstellung eines weiteren Fluidsystems; und
- Fig. 3: eine schematische Darstellung der Massestromanteile im Verbraucherfluidkreislauf.

In den Figuren mit gleichen Bezugszeichen versehene Teile entsprechen im Wesentlichen einander, sofern nichts anderes angegeben ist. Ferner wird darauf verzichtet, Bestandteile und Komponenten zu beschreiben, welche nicht wesentlich zum Verständnis der hierin offenbarten technischen Lehre sind.

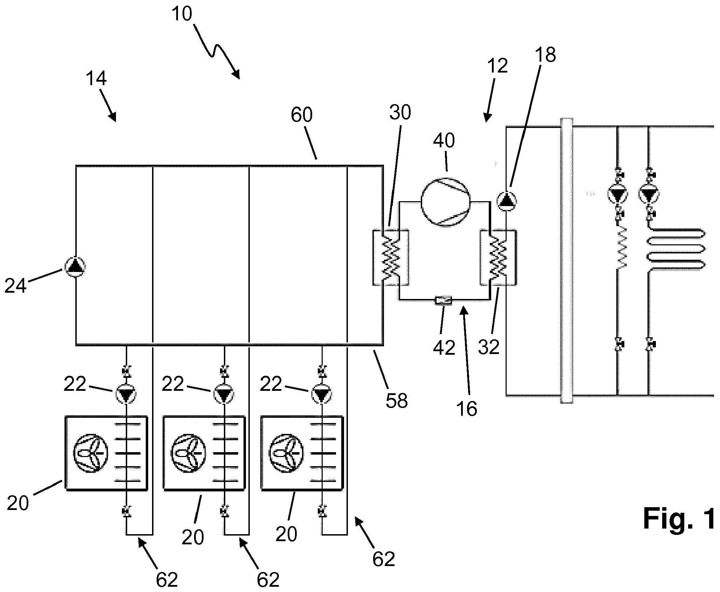

Fig. 1 zeigt ein Fluidsystem 10, aufweisend einen Erzeugerfluidkreislauf 12 und einen Verbraucherfluidkreislauf 14. Der Erzeugerfluidkreislauf 12 weist eine drehzahlgeregelte Wärmepumpe 16 auf. Die drehzahlgeregelte Wärmepumpe 16 ist über einen Wärmetauscher 30 mit dem Verbraucherfluidkreislauf 14 gekoppelt. Der Wärmetauscher 30 umfasst einen Verdampfer. Über den Wärmetauscher 30 wird mittels eines Arbeitsfluids (Kältemittel), welches in der Wärmepumpe 16 zirkuliert, Wärme des Fluids im Verbraucherfluidkreislauf 14 aufgenommen. Dabei kühlt das Fluid im Verbraucherfluidkreislauf 14 ab und das Arbeitsfluid wird erwärmt. In einem Verdichter 40 wird das Arbeitsfluid komprimiert und in einem zweiten Wärmetauscher 32, der einen Kondensator aufweist, gibt das Arbeitsfluid die Wärme an ein Fluid ab, welches in einem zweiten Fluidkreislauf zirkuliert. Zwischen dem Kondensator und dem Verdichter ist ein Expansionsventil 42 angeordnet. Über das Expansionsventil 42 wird das Arbeitsfluid expandiert, wobei der Druck des Arbeitsfluids abnimmt und das Arbeitsfluid abkühlt und teilweise verdampft. In dem Wärmetauscher 30 (Verdampfer) nimmt das Arbeitsfluid durch Verdampfen die über eine Rückführleitung 60 zugeführte Wärme aus dem Verbraucherfluidkreislauf 14 auf. Anschließend saugt der Verdichter 40 das verdampfte Arbeitsfluid wieder an und komprimiert dieses.

In dem zweiten Fluidkreislauf wird das erwärmte Fluid über eine Förderpumpe 18 einer nicht bezeichneten hydraulischen Weiche zugeführt, die mit einem zweiten Verbraucherfluidkreislauf gekoppelt ist. In dem zweiten Verbraucherfluidkreislauf sind Heizvorrichtungen angeordnet, die zum Erwärmen eines Raums oder einer Anlage vorgesehen sind. Der zweite Fluidkreislauf umfasst weitere Komponenten, wie Förderpumpen, Ventile, Wärmetauscher und Heizvorrichtungen, die in Fig. 1 nicht weiter dargestellt sind und nicht weiter beschrieben werden.

Der Verbraucherfluidkreislauf 14 ist über den Wärmetaucher 30 mit der Wärmepumpe 16 gekoppelt, die zum Kühlen des in dem Verbraucherfluidkreislauf 14 aufgenommenen Fluids dient. Das über den Wärmetauscher 30 mittels der Wärmepumpe 16 gekühlte Fluid wird in eine Zuführleitung 58 des Verbraucherfluidkreislaufs 14 eingebracht und zirkuliert über den Wärmetauscher 30 über die Zuführleitung 58 und die Rückführleitung 60.

Die Leitungen des Fluidsystems 10 weisen Querschnitte auf, die in Abhängigkeit der zu erzielenden Kühlleistung, der Länge der Leitungen und der Größe des Fluidsystems 10 festgelegt werden. Die Leitungsquerschnitte können auch bei den verschiedenen Leitungen voneinander abweichen. Zudem können auch die Leitungsquerschnitte einer Leitung über deren Länge hinweg variieren.

Der Verbraucherfluidkreislauf 14 weist mehrere parallele Nebenfluidkreisläufe 62 auf. Zuführleitungen der Nebenfluidkreisläufe 62 sind mit der Zuführleitung 58 des Hauptfluidkreislaufs des Verbraucherfluidkreislaufs 14 verbunden. Rückführleitungen der Nebenfluidkreisläufe 62 sind mit der Rückführleitung 60 des Hauptfluidkreislaufs des Verbraucherfluidkreislaufs 14 verbunden. In den Nebenfluidkreisläufen 62 sind Pumpen 22 und Kühlvorrichtungen 20 sowie Ventile angeordnet. Die Pumpen 22 regeln die Zufuhr des über die Wärmepumpe 16 gekühlten Fluids zu den Kühlvorrichtungen 20. Die Pumpen 22 sind so in den Nebenfluidkreisläufen 62 angeordnet, dass diese den Kühlvorrichtungen 20 vorgeschaltet sind. Das die Kühlvorrichtungen 20 durchströmende Fluid wird über die Rückführleitungen der Nebenfluidkreisläufe 62 zurückgeführt, wobei die Rückführleitungen in der Rückführleitung 60 des Hauptfluidkreislaufs zusammenlaufen. Die Pumpen 22 ermöglichen eine bedarfsabhängige Zufuhr von gekühlten Fluid zu den Kühlvorrichtungen 20. Über die Ventile können die Nebenfluidkreisläufe 62 von dem Hauptfluidkreislauf getrennt werden.

Zwischen der Zuführleitung 58 und der Rückführleitung 60 ist eine Ausgleichspumpe 24 angeordnet. Die Ausgleichspumpe 24 ist im Hauptfluidkreislauf des Verbraucherfluidkreislaufs 14 so angeordnet, dass sie den Zuführleitungen der Nebenfluidkreisläufe 62 nachgeschaltet und den Rückführleitungen der Nebenfluidkreisläufe 62 vorgeschaltet ist. Die Ausgleichspumpe 24 dient zum Einstellen eines konstanten Masse- bzw. Volumenstroms im Verbraucherfluidkreislauf 14. Die Ausgleichspumpe 24 ist als sogenannte Überströmpumpe ausgebildet. In dem Ausführungsbeispiel von Fig. 1 wird über die Ausgleichspumpe 24 auch die Zirkulation des Fluids durchgeführt. Die Ausgleichspumpe 24 dient dabei auch als Förderpumpe. Die Ausgleichspumpe 24 ist eine drehzahlgeregelte Pumpe und kann daher den Massestrom im Verbraucherfluidkreislauf 14 regeln. Die Ausgleichspumpe 24 wird derart angesteuert, dass der Gesamtmassestrom im Verbraucherfluidkreislauf 14 im Wesentlichen konstant bleibt. D.h. dass die Fördermenge über die Ausgleichspumpe 24 reduziert wird, wenn die Fördermenge in den Nebenfluidkreisläufen 62 über die Pumpen 22 erhöht wird und dass die Fördermenge über die Ausgleichspumpe 24 erhöht wird, wenn die Fördermenge in den Nebenfluidkreisläufen 62 über die Pumpen 22 reduziert wird. Die Gesamtfördermenge bzw. der Gesamtmassestrom bleibt dabei im Wesentlichen konstant. Dadurch wird zudem verhindert, dass bei einem hohen Kühlbedarf das Fluid in der Zuführleitung 58 soweit herabgesetzt wird, dass bspw. die Pumpe 22 im ersten Nebenfluidkreislauf 62 abschaltet, da die Fluidtemperatur zu gering ist.

Zudem weist das Fluidsystem 10 mehrere Temperaturerfassungseinrichtungen und Steuer- und Regeleinheiten auf. Die Temperaturerfassungseinrichtungen befinden sich mindestens in der Rückführleitung 60 und der Zuführleitung 58. Es können auch an anderen Stellen des Fluidsystems 10 weitere Temperaturerfassungseinrichtungen und Messvorrichtungen vorgesehen sein.

In dem Fluidsystem 10 ist als Fluid ein Kältemittel (Wasser + Frostschuzmittel), insbesondere eine Sole, aufgenommen. Die Sole ist eine Wasser-Glykol-Mischung. Die Wärmepumpe 16 ist so ausgebildet und ausgelegt, dass sie eine bestimmte Kühlung des Fluids bereitstellt. Ebenso wird ein bestimmtes Erwärmen eines Fluids im zweiten Fluidkreis durch die Wärmepumpe 16 erreicht. Die Temperaturspreizung, d.h. die Temperaturdifferenz zwischen der Fluidtemperatur in der Rückführleitung 60 und der Zuführleitung 58 beträgt in einem Normalbetrieb 4 Kelvin. Um dies zu erreichen, wird die Drehzahl des Verdichters 40 entsprechend gesteuert.

Bei dem Fluidsystem 10 sind in einem normalen Betrieb sämtliche Ventile, die bspw. als Magnetventile ausgebildet sein können, geöffnet.

In einem ersten, beispielhaften Betrieb des Fluidsystems 10, erfolgt ein Kühlen des Fluids im Verbraucherfluidkreislauf 14, wobei das Fluid über den Wärmetauscher 30 um 4 Kelvin gekühlt wird. Über eine Temperaturerfassungseinrichtung wird die Fluidtemperatur in der Zuführleitung 58 und in der Rückführleitung 60 erfasst.

Über die Zuführleitung 58 wird das gekühlte Fluid den Nebenfluidkreisläufen 62 zugeführt. In Abhängigkeit des Kühlbedarfs, regeln die Pumpen 22 die Zufuhr des Fluids zu den Kühlvorrichtungen 20. In den Kühlvorrichtungen 20 nimmt das Fluid Wärme auf. Das erwärmte Fluid wird dann über die Rückführleitungen der Nebenfluidkreisläufe 62 der Rückführleitung 60 zugeführt. In der Rückführleitung 60 ist eine Temperaturerfassungseinrichtung angeordnet, welche die Fluidtemperatur in der Rückführleitung 60 misst. Die Fluidtemperatur in der Rückführleitung 60 liegt dann über der Fluidtemperatur in der Zuführleitung 58. In Abhängigkeit der ermittelten Temperaturdifferenz erfolgt die Steuerung der Wärmepumpe 16 und damit das Kühlen des Fluids. Die Wärmepumpe 16 kann beispielsweise bei voller Leistung ein Kühlen des Fluids bis zu 10 Kelvin durchführen. Wird ein größerer Temperaturunterschied der Fluidtemperatur als 4 Kelvin zwischen der Rückführleitung 60 und der Zuführleitung 58 festgestellt, wird die Drehzahl des Verdichters 40 erhöht, wobei es zu einer stärkeren Kühlung des Fluids kommt. Die Wärmepumpe 16 bringt das Fluid wieder auf das Temperaturniveau, welches in der Zuführleitung 58 gemessen wurde und welches vorgegeben worden ist. Die Temperaturniveaus können über eine zentrale Steuerung vorgegeben und verändert werden.

In Abhängigkeit der Zufuhr des Fluids zu den Kühlvorrichtungen 20 über die Pumpen 22 regelt die Ausgleichspumpe 24 den Gesamt-Masse- bzw. Volumenstrom im Verbraucherfluidkreis 14. Die Ausgleichspumpe 24 wird so geregelt, dass der Massestrom im Verbraucherfluidkreislauf 14 konstant ist. Wird ein höherer Massestrom über die Pumpen 22 bezogen, so wird der Massestrom, der über die Ausgleichspumpe 24 gefördert wird, reduziert. Analog dazu wird der Massestrom, der über die Ausgleichspumpe 24 gefördert wird, erhöht, wenn der Massestrom über die Pumpen 22 reduziert wird. Die Pumpen 22 und die Ausgleichspumpe 24 sind als drehzahlgeregelte Pumpen ausgebildet und erhalten von einer nicht dargestellten Steuerung Steuersignale. Diese Steuersignale und/oder Signale über Datenschnittstellen der Pumpen 22 und der Ausgleichspumpe 24 werden zur Bestimmung und Einstellung des Massestroms herangezogen. Die von den jeweiligen Pumpen 22 geförderten Masseströme werden addiert. In Abhängigkeit eines einstellbaren Gesamtmassestroms im Verbraucherfluidkreislauf 14 wird dann die Drehzahl der Ausgleichspumpe 24 bestimmt, so dass der Gesamtvolumenstrom konstant bleibt.

Bei der Einstellung des Gesamtmassestroms kann es zu geringen Abweichungen von dem Soll-Gesamtmassestrom im Verbraucherfluidkreislauf 14 kommen. Daher ist der Gesamtmassestrom nicht immer konstant, jedoch sind diese regelungsbedingten Abweichungen sehr gering und daher vernachlässigbar.

Um den Betrieb des Fluidsystems 10 zu optimieren und um bspw. die Energiekosten für den Betrieb der Wärmepumpe 16 zu reduzieren, kann die Wärmepumpe 16 bewusst so geregelt werden, dass die Fluidtemperatur in der Zuführleitung unter eine benötigte Solltemperatur fällt. Dies erfolgt unabhängig davon ob tatsächlich ein erhöhter Kühlbedarf vorliegt. Nachdem die Drehzahl der Wärmepumpe 16 erhöht wurde, kühlt das Fluid im Verbraucherfluidkreislauf 14 ab. Dadurch wird von den Kühlvorrichtungen 20 auch weniger Fluid benötigt und die Drehzahl der Pumpen 22 entsprechend angepasst, so dass der Massestrom über die Nebenfluidkreisläufe 62 abnimmt. Entsprechend nimmt der Massestromanteil der Ausgleichspumpe 24 zu und die Fluidtemperatur in der Rückführleitung 60 liegt unter einer Normaltemperatur, bei welcher eine Differenz zwischen Rückführleitung 60 und Zuführleitung 58 von 4 Kelvin vorherrscht. Dies wird für einen "Kälte"-Speicherbetrieb toleriert.

Das Speichern von "Kälte" in dem Fluidsystem 10 kann dann erfolgen, wenn die Energiekosten für den Betrieb der Wärmepumpe 16 gering sind. Beispielsweise ist dies nachts oder wenn günstiger Strom durch Erzeugungseinrichtungen für erneuerbare Energien (Windenergie, Solarstrom, etc.) vorliegt der Fall. Steigen die Energiekosten, kann der Betrieb der Wärmepumpe 16 reduziert werden, so dass die Wärmepumpe 16 nur noch einen Teil ihrer Leistung abruft und in einem unteren Teillastbetrieb läuft. Es kann auch zu einem Abschalten der Wärmepumpe 16 kommen, wenn das Fluid entsprechend gekühlt wurde. Dabei wird die benötigte Wärme dem Fluid entnommen, dessen Temperatur unter einem bestimmten Temperaturlevel für einen Normalbetrieb liegt. Die Wärmepumpe 16 kann dann auch in einem Teillastbetrieb das Kühlen des Fluids auf einem bestimmten Temperaturlevel halten, wobei eine höhere Kühlleistung der in dem Fluid gespeicherten "Kälte" entnommen wird. Übersteigt die Temperaturdifferenz zwischen Rückführleitung 60 und Zuführleitung 58 einen bestimmten Wert, beispielsweise 4 Kelvin, wird die Leistung der Wärmepumpe 16 durch Erhöhen der Drehzahl des Verdichters 40 erhöht.

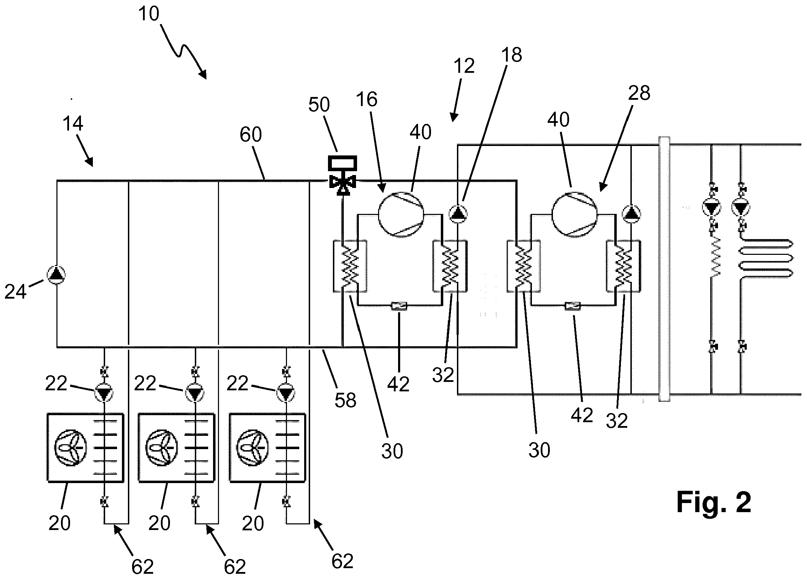

Fig. 2 zeigt eine schematische Darstellung eines weiteren Fluidsystems 10. Das in Fig. 2 gezeigte Fluidsystem 10 unterscheidet sich von dem in Fig. 1 gezeigten Fluidsystem 10 im Wesentlichen dadurch, dass zwei drehzahlgeregelte Wärmepumpen 16 und 28 vorgesehen sind. In der Rückführleitung 60 ist ein 3-Wege-Ventil 50 angeordnet. Das 3-Wege-Ventil 50 ist über eine zentrale Steuerung steuerbar und regelt in Abhängigkeit der Steuervorgaben die Zufuhr von Fluid zu der ersten drehzahlgeregelten Wärmepumpe 16 und der zweiten drehzahlgeregelten Wärmepumpe 28. Um eine weitere Herabsetzung der Fluidtemperatur zu erreichen kann dabei das Fluid über das 3-Wege-Ventil 50 sowohl zu dem Wärmetauscher 30 der ersten Wärmepumpe 16 als auch zu dem Wärmetauscher 30 der zweiten Wärmepumpe 28 geführt werden. Dies bietet sich insbesondere dann an, wenn "Kälte" in dem Fluidsystem 10, insbesondere in dem Verbraucherfluidkreislauf 14 gespeichert werden soll.

Bei einem Fluidsystem 10 für Gebäude oder Anlagen kann ein Herabsetzen der Fluidtemperatur beispielsweise nachts erfolgen, wobei hier die Energiekosten für den von den Wärmepumpen 16 und 28 benötigten Strom geringer sind als tagsüber. Die Pumpen 22 fördern dann weniger Fluid zu den Vorrichtungen 20, wobei die Kühlleistung der Vorrichtungen 20 beibehalten wird. Nach dem Herabsenken der Fluidtemperatur kann die Wärmepumpe abgeschaltet werden. Tagsüber erfolgt dann das Kühlen des Fluids für einen bestimmten Zeitraum nur durch eine Wärmepumpe 16, wobei höhere Kühlleistungen aufgrund bspw. höherer Außentemperaturen durch die in der Zuführleitung 58 und Rückführleitung 60 gespeicherte "Kälte" kompensiert werden können. Die Fluidtemperatur zum Aktivieren mindestens einer zusätzlichen Wärmepumpe 28 und zur Erhöhung der Leistung der Wärmepumpe 16 wird erst später erreicht, da die Fluidtemperatur in der Zuführleitung 58 und der Rückführleitung 60 unter der regulären Fluidtemperatur liegt. Hierdurch können tagsüber die Energiekosten für den Strom zum Betrieb der Wärmepumpen 16 und 28 reduziert werden.

Vorteilhafterweise wird die Ausgleichspumpe 24 derart gesteuert, dass der Massestrom des Fluids im Verbraucherfluidkreislauf 14 konstant gehalten wird. Insbesondere wird die Ausgleichspumpe 24 so betrieben, dass diese Schwankungen in den Nebenfluidkreisläufen 62 mit den Pumpen 22 und Kühlvorrichtungen 20 ausgleicht.

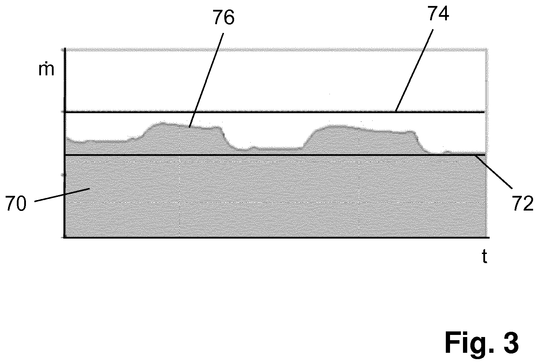

Fig. 3 zeigt über die Linie 74 einen Soll-Massestrom, der im Verbraucherfluidkreislauf 14 konstant gehalten werden soll. Da die Masse- bzw. Volumenströme der Kühlvorrichtungen 20 variieren und durch die Pumpen 22 die Menge des Fluids in den Nebenfluidkreisläufen 62 schwankt, wird die Förderleistung der Ausgleichspumpe 24 an den Massestrom der Pumpen 22 angepasst. Der Verlauf 76 zeigt den Massestrom, der über die Pumpen 22 gefördert wird. Die grau hinterlegte Fläche 70 repräsentiert den Massestromanteil der Pumpen 22 an dem Gesamtmassestrom. Die Differenz zwischen dem Verlauf 76 und der Linie 74 repräsentiert den Anteil der Ausgleichspumpe 24 am Gesamtmassestrom im Verbraucherfluidkreislauf 14. Der Anteil der Ausgleichspumpe 24 variiert analog zu dem Anteil der Pumpen 22, wobei die Summe der Masseströme im Wesentlichen konstant gehalten wird, indem der durch die Ausgleichspumpe 24 geförderte Massestrom an den durch die Pumpen 22 geförderten Massestrom angepasst wird. Bei der Darstellung von Fig. 3 liegt der Anteil des Massestroms der Ausgleichspumpe 24 zwischen den Linien 74 und 72. Bspw. wird die Ausgleichspumpe 24 für das Fluidsystem 10 nach Maßgabe einer Berechnung für den Arbeitsbereich der Ausgleichspumpe 24 in Abhängigkeit des im Vorfeld ermittelten Massestromförderanteils ausgelegt und ausgewählt.

Bei dem vorstehend beschriebenen Fluidsystem 10 kann einfach "Kälte" gespeichert werden. Zudem wird der Massestrom im Verbraucherfluidkreislauf 14 konstant gehalten, indem die Ausgleichspumpe 24 Schwankungen durch die Kühlvorrichtungen 20 ausgleicht.

### Bezugszeichenliste

- 10: Fluidsystem
- 12: Erzeugerfluidkreislauf
- 14: Verbraucherfluidkreislauf
- 16: Wärmepumpe
- 18: Förderpumpe
- 20: Kühlvorrichtung
- 22: Pumpe
- 24: Ausgleichspumpe
- 28: Wärmepumpe
- 30: Wärmetauscher
- 32: Wärmetauscher
- 40: Verdichter
- 42: Expansionsventil
- 50: 3-Wege-Ventil
- 58: Zuführleitung
- 60: Rückführleitung
- 62: Nebenfluidkreislauf
- 70: Fläche
- 72: Linie
- 74: Linie
- 76: Verlauf

## Patentansprüche

1. Verfahren zur Steuerung eines Fluidsystems (10), aufweisend einen Erzeugerfluidkreislauf (12) und einen Verbraucherfluidkreislauf (14), wobei der Erzeugerfluidkreislauf (12) mindestens eine Wärmepumpe (16; 28) aufweist, wobei der Verbraucherfluidkreislauf (14) mindestens zwei Nebenfluidkreisläufe (62) aufweist, die mit einer Zuführleitung (58) und einer Rückführleitung (60) des Verbraucherfluidkreislaufs (14) verbunden sind und die jeweils mindestens eine Kühlvorrichtung (20) sowie eine Pumpe (22) aufweisen, wobei der Verbraucherfluidkreislauf (14) mindestens eine Ausgleichspumpe (24) aufweist,
**dadurch gekennzeichnet, dass** die Wärmepumpe eine drehzahlgeregelte Wärmepumpe ist, wobei die mindestens eine Ausgleichspumpe so gesteuert wird, dass der Massestrom im Verbraucherfluidkreislauf (14) konstant gehalten wird, wobei die mindestens eine Ausgleichspumpe (24) so gesteuert wird, dass der über die mindestens eine Ausgleichspumpe (24) geförderte Massestrom erhöht wird, wenn der Massestrom über mindestens eine Pumpe (22) in einem Nebenfluidkreislauf (62) reduziert wird, und dass der über die mindestens eine Ausgleichspumpe (24) geförderte Massestrom reduziert wird, wenn der Massestrom über mindestens eine Pumpe (22) in einem Nebenfluidkreislauf (62) erhöht wird, wobei die Ausgleichspumpe (24) den Zuführleitungen der Nebenkreisläufe (62) nachgeschaltet und den Rückführleitungen der Nebenfluidkreisläufe (62) vorgeschalten wird.

2. Verfahren nach Anspruch 1, wobei die mindestens eine drehzahlgeregelte Wärmepumpe (16; 28) nach Maßgabe der Temperatur des Fluids in der Rückführleitung (60) und/oder in der Zuführleitung (58) des Verbraucherfluidkreislaufs (14) gesteuert wird.

3. Fluidsystem, aufweisend einen Erzeugerfluidkreislauf (12) und einen Verbraucherfluidkreislauf (14), wobei
- der Erzeugerfluidkreislauf (12) mindestens eine Wärmepumpe (16; 28) aufweist,
- der Verbraucherfluidkreislauf (14) mindestens zwei Nebenfluidkreisläufe (62) aufweist, die jeweils mit einer Zuführleitung (58) und einer Rückführleitung (60) des Verbraucherfluidkreislaufs (14) verbunden sind,
- die Nebenfluidkreisläufe (62) jeweils mindestens eine Kühlvorrichtung (20) und eine Pumpe (22) aufweisen,
- der Verbraucherfluidkreislauf (14) mindestens eine Ausgleichspumpe (24) aufweist,
**dadurch gekennzeichnet, dass**
- die Wärmepumpe eine drehzahlgeregelte Wärmepumpe ist,
- die mindestens eine Ausgleichspumpe (24) derart steuerbar ist, dass der Massestrom im Verbraucherfluidkreislauf (14) konstant gehalten wird,
wobei die mindestens eine Ausgleichspumpe (24) so gesteuert ist, dass der über die mindestens eine Ausgleichspumpe (24) geförderte Massestrom erhöht wird, wenn der Massestrom über mindestens eine Pumpe (22) in einem Nebenfluidkreislauf (62) reduziert wird, und der über die mindestens eine Ausgleichspumpe (24) geförderte Massestrom reduziert wird, wenn der Massestrom über mindestens eine Pumpe (22) in einem Nebenfluidkreislauf (62) erhöht wird,
wobei die Ausgleichspumpe (24) den Zuführleitungen der Nebenkreisläufe (62) nachgeschaltet und den Rückführleitungen der Nebenfluidkreisläufe (62) vorgeschalten ist.

4. Fluidsystem nach Anspruch 3, wobei in dem Fluidsystem (10) ein Kältemittel aufgenommen ist.

5. Fluidsystem nach Anspruch 3 oder 4, wobei der Erzeugerfluidkreislauf (12) mindestens zwei drehzahlgeregelte Wärmepumpen (16; 28) aufweist und die Rückführleitung (60) des Verbraucherfluidkreislaufs (14) über eine Ventilanordnung mit den mindestens zwei drehzahlgeregelten Wärmepumpen (16; 28) verbunden ist.

6. Fluidsystem nach einem der Ansprüche 3 bis 5, wobei die mindestens eine Ausgleichspumpe (24), und/oder die mindestens eine Pumpe (22) drehzahlgesteuerte Pumpen sind.

7. Fluidsystem nach einem der Ansprüche 3 bis 6, wobei mindestens in der
- Rückführleitung (60) des Verbraucherfluidkreislaufs (14),
- Zuführleitung (58) des Verbraucherfluidkreislaufs (14), und/oder
- im Erzeugerfluidkreislauf (12)
mindestens eine Temperaturerfassungseinrichtung angeordnet ist.

8. Fluidsystem nach einem der Ansprüche 3 bis 7, wobei die mindestens eine drehzahlgeregelte Wärmepumpe (16; 28) eine Inverter-Wärmepumpe ist.

## Claims

1. Method of controlling a fluid system (10), comprising a producer fluid circuit (12) and a consumer fluid circuit (14), wherein the producer fluid circuit (12) comprises at least one heat pump (16; 28), wherein the consumer fluid circuit (14) comprises at least two subsidiary fluid circuits (62) which are connected with a feed line (58) and a return line (60) of the consumer fluid circuit (14) and which each comprise at least one cooling device (20) as well as a pump (22), wherein the consumer fluid circuit (14) comprises at least one equalising pump (24), **characterised in that** the heat pump is a speed-regulated heat pump, wherein the at least one equalising pump is so controlled that the mass flow in the consumer fluid circuit (14) is kept constant, wherein the at least one equalising pump (24) is so controlled that the mass flow conveyed by way of the at least one equalising pump (24) is increased when the mass flow is reduced by way of at least one pump (22) in a subsidiary fluid circuit (62), and that the mass flow conveyed by way of the at least one equalising pump (24) is reduced when the mass flow is increased by way of at least one pump (22) in a subsidiary fluid circuit (62), wherein the equalising pump (24) is downstream of the feed lines of the subsidiary circuits (62) and upstream of the return lines of the subsidiary fluid circuits (62).

2. Method according to claim 1, wherein the at least one speed-regulated heat pump (16; 28) is controlled in dependence on the temperature of the fluid in the return line (60) and/or in the feed line (58) of the consumer fluid circuit (14).

3. Fluid system, comprising a producer fluid circuit (12) and a consumer fluid circuit (14), wherein
- the producer fluid circuit (12) comprises at least one heat pump (16; 28),
- the consumer fluid circuit (14) comprises at least two subsidiary fluid circuits (62) which are each connected with a feed line (58) and a return line (60) of the consumer fluid circuit (14),
- the subsidiary fluid circuits (62) each comprise at least one cooling device (20) and pump (22),
- the consumer fluid circuit (14) comprises at least one equalising pump (24), **characterised in that**
- the heat pump is a speed-regulated heat pump,
- the at least one equalising pump (24) is so controllable that the mass flow in the consumer fluid circuit (14) is kept constant,
wherein the at least one equalising pump (24) is so controlled that the mass flow conveyed by way of the at least one equalising pump (24) is increased when the mass flow is reduced by way of at least one pump (22) in a subsidiary fluid circuit (62), and the mass flow conveyed by way of the at least one equalising pump (24) is reduced when the mass flow is increased by way of at least one pump (22) in a subsidiary fluid circuit (62),
wherein the equalising pump (24) is downstream of the subsidiary circuits (62) and upstream of the return lines of the subsidiary fluid circuits (62).

4. Fluid system according to claim 3, wherein a refrigerant is received in the fluid system (10).

5. Fluid system according to claim 3 or 4, wherein the producer fluid circuits (12) comprise at least two speed-regulated heat pumps (16; 28) and the return line (60) of the consumer fluid circuit (14) is connected by way of a valve arrangement with the at least two speed-regulated heat pumps (16; 28).

6. Fluid system according to any one of claims 3 to 5, wherein the at least one equalising pump (24), and/or the at least one pump (22) are speed-controlled pumps.

7. Fluid system according to any one of claims 3 to 6, wherein at least one temperature detecting device is arranged in
- the return line (60) of the consumer fluid circuit (14),
- the feed line (58) of the consumer fluid circuit (14), and/or
- in the producer fluid circuit (12).

8. Fluid system according to any one of claims 3 to 7, wherein the at least one speed-regulated heat pump (16; 28) is an inverter heat pump.

## Revendications

1. Procédé de commande d'un système fluidique (10), comprenant un circuit de fluide générateur (12) et un circuit de fluide consommateur (14), dans lequel le circuit de fluide générateur (12) comprend au moins une pompe à chaleur (16 ; 28),
dans lequel le circuit de fluide consommateur (14) comprend au moins deux circuits de fluide secondaires (62), qui sont reliés à une conduite d'amenée (58) et à une conduite de retour (60) du circuit de fluide consommateur (14) et qui présentent respectivement au moins un dispositif de refroidissement (20) ainsi qu'une pompe (22), dans lequel le circuit de fluide consommateur (14) comprend au moins une pompe de compensation (24),
**caractérisé en ce que** la pompe à chaleur est une pompe à chaleur à régime régulé, dans lequel la au moins une pompe de compensation est commandée de sorte que le débit massique est maintenu constant dans le circuit de fluide consommateur (14), dans lequel la au moins une pompe de compensation (24) est commandée de sorte que le débit massique refoulé par la au moins une pompe de compensation (24) est augmenté lorsque le débit massique est réduit dans un circuit de fluide secondaire (62) par l'intermédiaire d'au moins une pompe (22), que et le débit massique refoulé par la au moins une pompe de compensation (24) est réduit lorsque le débit massique est augmenté dans un circuit de fluide secondaire (62) par l'intermédiaire d'au moins une pompe (22), dans lequel la pompe de compensation (24) est montée en aval des conduites d'amenée des circuits secondaires (62) et est montée en amont des conduites de retour des circuits de fluide secondaires (62).

2. Procédé selon la revendication 1, dans lequel la au moins une pompe à chaleur (16 ; 28) à régime régulé est commandée en fonction de la température du fluide dans la conduite de retour (60) et/ou dans la conduite d'amenée (58) du circuit de fluide consommateur (14).

3. Système fluidique, comprenant un circuit de fluide générateur (12) et un circuit de fluide consommateur (14), dans lequel
- le circuit de fluide générateur (12) comprend au moins une pompe à chaleur (16 ; 28),
- le circuit de fluide consommateur (14) comprend au moins deux circuits de fluide secondaires (62), qui sont reliés respectivement à une conduite d'amenée (58) et à une conduite de retour (60) du circuit de fluide consommateur (14),
- les circuits de fluide secondaires (62) présentent respectivement au moins un dispositif de refroidissement (20) et une pompe (22),
- le circuit de fluide consommateur (14) comprend au moins une pompe de compensation (24),
**caractérisé en ce que**
- la pompe à chaleur est une pompe à chaleur à régime régulé,
- la au moins une pompe de compensation (24) peut être commandée de telle sorte que le débit massique est maintenu constant dans le circuit de fluide consommateur (14),
dans lequel la au moins une pompe de compensation (24) est commandée de sorte que le débit massique refoulé par la au moins une pompe de compensation (24) est augmenté lorsque le débit massique est réduit dans un circuit de fluide secondaire (62) par l'intermédiaire d'au moins une pompe (22), et le débit massique refoulé par la au moins une pompe de compensation (24) est réduit lorsque le débit massique est augmenté dans un circuit de fluide secondaire (62) par l'intermédiaire d'au moins une pompe (22),
dans lequel la pompe de compensation (24) est montée en aval des conduites d'amenée des circuits secondaires (62) et est montée en amont des conduites de retour des circuits de fluide secondaires (62).

4. Système fluidique selon la revendication 3, dans lequel un fluide frigorifique est logé dans le système fluidique (10).

5. Système fluidique selon la revendication 3 ou 4, dans lequel le circuit de fluide générateur (12) comprend au moins deux pompes à chaleur (16 ; 28) à régime régulé et la conduite de retour (60) du circuit de fluide consommateur (14) est reliée aux au moins deux pompes à chaleur (16 ; 28) à régime régulé par un ensemble soupape.

6. Système fluidique selon l'une quelconque des revendications 3 à 5, dans lequel la au moins une pompe de compensation (24), et/ou la au moins une pompe (22) sont des pompes à régime commandé.

7. Système fluidique selon l'une quelconque des revendications 3 à 6, dans lequel au moins un dispositif de détection de température est agencé au moins dans
- la conduite de retour (60) du circuit de fluide consommateur (14),
- la conduite d'amenée (58) du circuit de fluide consommateur (14), et/ou
- dans le circuit de fluide générateur (12).

8. Système fluidique selon l'une quelconque des revendications 3 à 7, dans lequel la au moins une pompe à chaleur (16 ; 28) à régime régulé est une pompe à chaleur réversible.
